# EUROPEAN PATENT APPLICATION

(11) **EP 3 457 338 A1**
(43) Date of publication of application: **20.03.2019**
(21) Application number: 17196412.5
(22) Date of filing: 13.10.2017
(51) Int. Cl.: G06Q 10/06, G06Q 10/10

(54) **SYSTEM AND METHOD FOR REAL-TIME UPDATING OF AT LEAST ONE CENTRALLY VIEWABLE SCHEDULE**

(30) Priority: 13.09.2017 EP 17190884
(71) Applicant: Australian Celebrity Talent Agency Pty Ltd, 2028 Double Bay (AU)
(72) Inventor: HARRIS, John Meitanis, 2110 Hunters Hill New South Wales (AU)
(74) Representative: Patent- und Rechtsanwälte Ullrich & Naumann

(57) **Abstract**

There is provided a system for real-time updating of at least one centrally viewable schedule. The system includes a central server having a secure database that includes a plurality of centrally viewable schedules that are each visually represented by a corresponding calendar. Each centrally viewable schedule is associated with a unique registered contributing user. The central server further includes a communication module for communicating with a plurality of user devices for a user. The system also includes a user interface viewable on any user device, in communication with the communication module, for viewing a schedule associated with a desired one or more unique registered contributing users. The central server is responsive to a secure request in relation to the one or more unique registered contributing users from the user interface to take a number of actions within a predefined time period. These actions include checking the schedule associated with the one or more unique registered contributing users and, based on this check, substantially simultaneously providing: to the user interface through the communication module a request response; and to the one or more unique registered contributing users through the communication module a notification response, and selectively update in real-time the schedule associated with the one or more unique registered contributing users.

## Description

### FIELD OF THE INVENTION

The present invention relates to systems and methods for real-time updating of at least one centrally viewable schedule.

Embodiments of the invention have been particularly developed for use in industries that utilize scheduling systems viewable by multiple parties and more generally booking of appointments. While some embodiments will be described herein with particular reference to that application, it will be appreciated that the invention is not limited to such a field of use, and is applicable in broader contexts.

### BACKGROUND

Any discussion of the background art throughout the specification should in no way be considered as an admission that such art is widely known or forms part of common general knowledge in the field.

Part of many industries, in particular the entertainment industry, is the necessity to book a person or persons' time. In the case of the entertainment industry, this is presently a very complicated and outdated process. For example, if there was a desire to book a particular artist for a corporate event, this would need to be done by contacting by email or telephone various sources including a number of management agencies that may represent the particular artist. These agencies would then contact the agent for particular artist to enquire on the availability of the artist. So there are instances where a single enquiring party wishes to book a particular artist and that artist (or their agent) would receive multiple enquiries about the same corporate event which may go through several different channels to get to the artist (or their agent). This results in convoluted instances of multiple bookings resulting in much confusion and booking instability, not to mention multiple cost margins and inflated pricing. Furthermore, the lack of transparency of existing systems enables intermediary parties to take advantage of both the enquiring party and the artist.

Another major issue stemming from the lack of transparency is the fact that the availability of an artist or venue is not easily accessible. As such, multiple enquiries about an artist can be sent without knowing if the desired date and time is even available. This therefore wastes not only the time of any enquiring parties but also the time of the artist and their agent as they are bombarded with enquiries.

Although system exist in other industries that provide a viewable calendar within which appointments can be made, the updating of these systems and the way they accept appointments are unsuitable for industries such as the entertainment industry where specific forms (including terms and conditions) need to be produces and accepted in a very specific and stringent way, which makes providing real-time information relatively difficult.

### SUMMARY OF THE INVENTION

It is an object of the present invention to overcome or ameliorate at least one of the disadvantages of the prior art, or to provide a useful alternative.

According to a first aspect of the present invention there is provided a system for real-time updating of at least one centrally viewable schedule including:
a central server having a secure database that includes a plurality of centrally viewable schedules each associated with a unique registered contributing user and a communication module; and
at least one user interface in communication with the communication module for viewing a schedule associated with the one or more unique registered contributing users, wherein the central server is responsive to a secure request in relation to the one or more unique registered contributing users from the at least one user interface to, within a predefined time period:
   check the schedule associated with the one or more unique registered contributing users; and
   based on the check, substantially simultaneously provide: to the at least one user interface through the communication module a request response; and to the one or more unique registered contributing users through the communication module a notification response, and selectively update in real-time the schedule associated with the one or more unique registered contributing users.

In an embodiment, each unique registered contributing user is either an artist user or a venue user. In a preferred embodiment, artist user includes an artist agent user.

In an embodiment, the schedule associated with the one or more unique registered contributing users includes free and/or occupied blocks and is viewable on the at least one user interface. In a preferred embodiment, the secure request includes a desired enquiry date and a desired enquiry time. In a preferred embodiment, the desired enquiry date and time can only be chosen from the free blocks.

In an embodiment, the central server includes a document generation module for generating one or more of the group including: a user booking agreement form; a contributor booking agreement form; and an expense form. In a preferred embodiment, the request response includes the booking agreement form. In a preferred embodiment, the request response includes the expense form. In a preferred embodiment, the notification response includes the contributor booking agreement form.

According to a second aspect of the present invention there is provided a method for real-time updating of at least one centrally viewable schedule including:
providing a central server having a secure database that includes a plurality of centrally viewable schedules each associated with a unique registered contributing user and a communication module;
providing at least one user interface in communication with the communication module for viewing a schedule associated with the one or more unique registered contributing users; and
by the central server, in response to a secure request in relation to one or more unique registered contributing users from the at least one user interface, within a predefined time period:
   checking the schedule associated with the one or more unique registered contributing users; and
   based on the check, substantially simultaneously providing: to the at least one user interface through the at least one communication module a request response; and to the one or more unique registered contributing users through the at least one communication module a notification response, and selectively updating in real-time the schedule associated with the one or more unique registered contributing users.

In an embodiment, each unique registered contributing user is either an artist user or a venue user. In a preferred embodiment, artist user includes an artist agent user.

In an embodiment, the schedule associated with the one or more unique registered contributing users includes free and/or occupied blocks and is viewable on the at least one user interface. In a preferred embodiment, the secure request includes a desired enquiry date and a desired enquiry time. In a preferred embodiment, the desired enquiry date and time can only be chosen from the free blocks.

In an embodiment, the central server includes a document generation module, and the method includes the additional step of generating one or more of the group including: a user booking agreement form; a contributor booking agreement form; and an expense form. In a preferred embodiment, the request response includes the booking agreement form. In a preferred embodiment, the request response includes the expense form. In a preferred embodiment, the notification response includes the contributor booking agreement form.

According to a third aspect of the present invention there is provided a computer system including a processor configured to perform a method according to the second aspect.

According to a fourth aspect of the present invention there is provided a computer program product configured to perform a method according to the second aspect.

According to a fifth aspect of the present invention there is provided a computer readable medium carrying a set of instructions that when executed by one or more processors cause the one or more processors to perform a method according to the second aspect.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

### BRIEF DESCRIPTION OF THE DRAWINGS

Preferred embodiments of the invention will now be described, by way of example only, with reference to the accompanying drawings in which:
Figure 1 is a schematic representation of a system according to one embodiment.
Figure 2 is a flowchart illustrating the system according to Figure 1 in use.
Figure 3 is a flowchart illustrating the system according to Figure 1 in use.

### DETAILED DESCRIPTION

Described herein are systems and methods for real-time updating of at least one centrally viewable schedule.

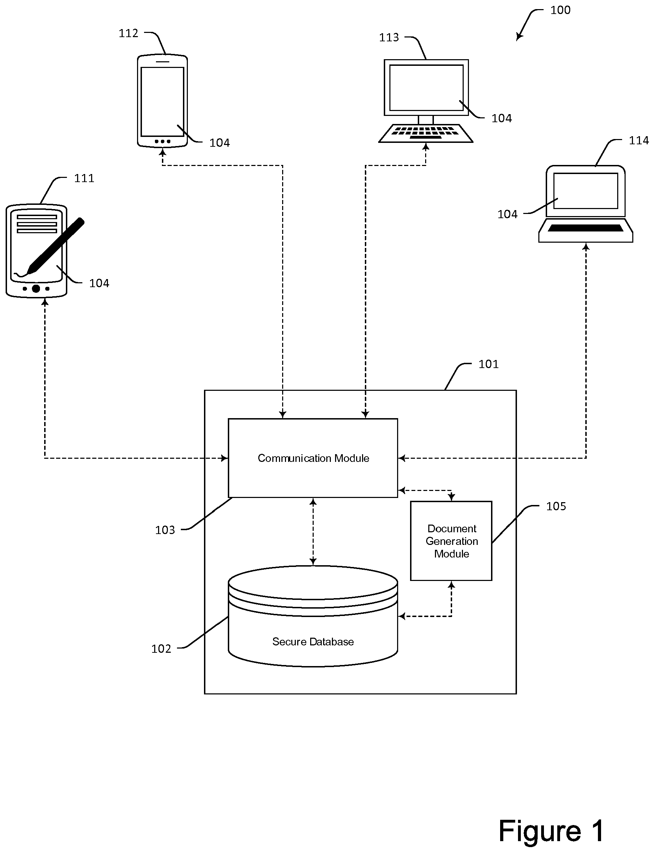

Referring to Figure 1, there is provided a system 100 for real-time updating of at least one centrally viewable schedule. System 100 includes a central server 101 having a secure database 102 that includes a plurality of centrally viewable schedules that are each visually represented by a corresponding calendar (not shown). Each centrally viewable schedule is associated with a unique registered contributing user. Central server 101 further includes a communication module 103 for communicating with a plurality of user devices denoted by references 111, 112, 113 and 114 for a user.

System 100 also includes a user interface 104 viewable on any user device, in communication with communication module 103, for viewing a schedule associated with a desired one or more unique registered contributing users. Central server 101 is responsive to a secure request in relation to the one or more unique registered contributing users from user interface 104 to take a number of actions within a predefined time period. These actions include checking the schedule associated with the one or more unique registered contributing users and, based on this check, substantially simultaneously providing: to user interface 104 through communication module 104 a request response; and to the one or more unique registered contributing users through communication module 104 a notification response, and selectively update in real-time the schedule associated with the one or more unique registered contributing users.

The calendar associated with the unique registered contributing users, as viewed on user interface 104, includes both free and occupied time blocks which represent when a desired unique registered contributing user is available and unavailable for booking.

The secure request from user interface 104 includes details of the desired appointment of the unique registered contributing user including a desired enquiry date and a desired enquiry time. It is noted that the desired enquiry date and time can only be chosen from the free time blocks.

Central server 101 includes a document generation module 105 for generating one or more of the group including: a user booking agreement form; a contributor booking agreement form; and an expense form. The request response includes the booking agreement form and the expense form. The booking agreement form includes terms and conditions and other pertinent information to be relayed to the user who wishes to book the desired unique registered contributing user. The expense form is an invoice with itemized costs for booking the desired unique registered contributing user.

The notification response includes the contributor booking agreement form which includes terms and conditions and other pertinent information to be relayed to the desired unique registered contributing user who is to be booked the by the user.

Each unique registered contributing user is either an artist user or a venue user, and artist users can be an artist agent user. Artist user refers to a user that is an artist or represents an artist, the latter of which being an artist's agent or manage who acts on behalf of the artist.

As referred to above, various user devices can access user interface 104, including the illustrated Personal Digital Assistant (PDAs) 111, smart phone 112, Personal Computer (PCs) 113 and laptop computer 114. It will be appreciated that the types of compatible user devices are not limited to the illustrated devices, any could be any other computing devices that have internet access, for example, tablets.

Database 102 includes the calendars of all unique registered contributing users and is updated in real time in order to display a correct up-to-date schedule of each unique registered contributing user.

User interface 104 takes the form of a software application, with versions in both iOS and Android, and also takes the form of a website. The application includes a customized search function that was developed in Swift using Xcode. The search function is such that when the user enters any character then it will best match the unique registered contributing users from database 102.

The application includes a custom built bottom navigation tab view to enable ease of use when switching between the tabs. For an artist, the tabs will include: My Schedule, Notifications, and Profile. For a manager/agent, the tabs will include: New Requests, Bookings, Talent, and Profile. For a client (equivalent to user), the tabs will include: Book Talent, My Bookings, Notifications, and Profile.

Database 102 utilizes a normalization database structure which provides the following advantages:
- Improves data integrity, as there is no redundant or neglected data present in such structures.
- Optimizes queries, as normalized tables produce rapid, efficient joins.
- Fast index creation and sorting, as the tables in this structure have fewer columns.
- Fast performance of updates, as there are fewer indexes per table in this structure.
- Improves concurrency resolution, as table locks will affect less data in this structure.

This framework is specifically chosen by the inventor to provide the better output for this specific application, in the sense that the Application Programming Interface (API) responses are fast and results are achieved quickly in comparison to other database frameworks such as hierarchical structures that may be more straightforward to implement. So the sending of queries, query execution and response from database 102 is particularly fast and efficient with this technique. Hence the APIs respond fast to show the results either in the application or website form.

The booking process itself is developed using Laravell framework.

Given the calendar functionality for the Android application is created specifically for user interface 104, this version includes a customised filter implementation. Specifically, the custom developed filter view shows complete months with selection for three years, as compared to existing normal filters that show the month list of current year only.

Both users and unique registered contributing users are required to log in to use the application or website versions.

New users can sign-up by filling the following fields :
▪ Name
▪ Company Name
▪ Phone Number
▪ Email ID
▪ Password

Once a user has an existing profile, that existing user can log in by using their Email ID and password.

For a user to book or enquire about an artist user, the artist user first needs to be selected. An alphabetical list of artists is provided which can be navigated by the user by scrolling the list, and making a selection on the desired artist. Once selected, the artist page loads with information on the artist including biographic details, performance type and availability.

The availability of the artist is shown in calendar form (the centrally viewable schedule for that unique registered contributing user). Colors in the calendar will indicate the following :
- Available - Green
- Not Available - Red
- Under Enquiry- Orange

The user can then select any of the available dates for booking.

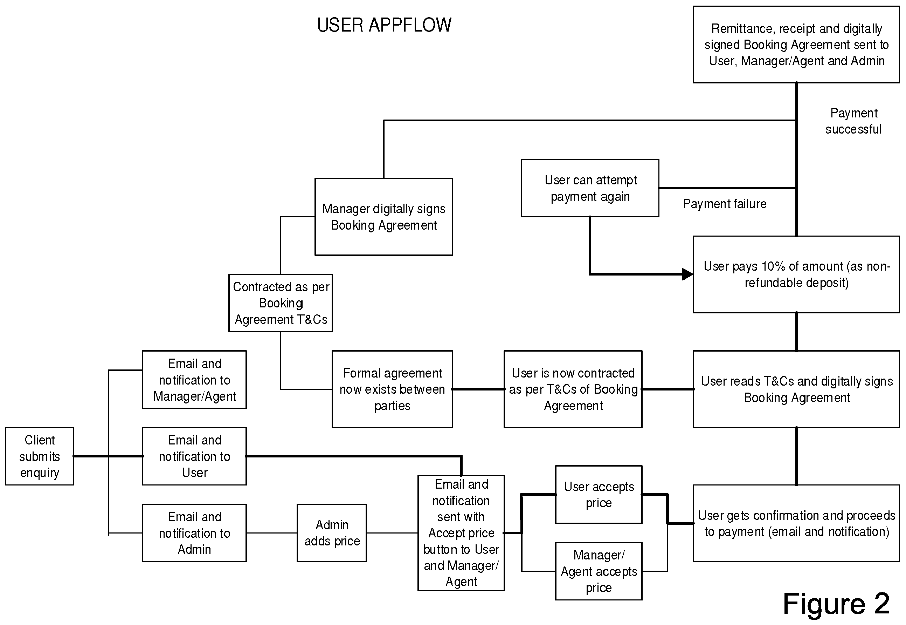

Referring to Figure 2, after selecting date, user has to enter the following fields:
- Select Available Event/Function Time
- Venue
- Purpose of Event
- Description of Event
- Performance Type
- Event Type
- Total Number of Guests Expected (known as PAX)
- Budget

After this, the user then enters their details, that would be the following:
- Name
- Company
- Phone Number
- Email ID
- Optionally, Additional Comments

As mentioned above, artists can assign exclusive agents or managers to act on their behalf when using system 100. Again, managers/agents are required to log in to use the application or website versions using unique credentials.

Administrative users, in the form of the authorised technicians of system 100, provide credentials to each and every manager/agent.

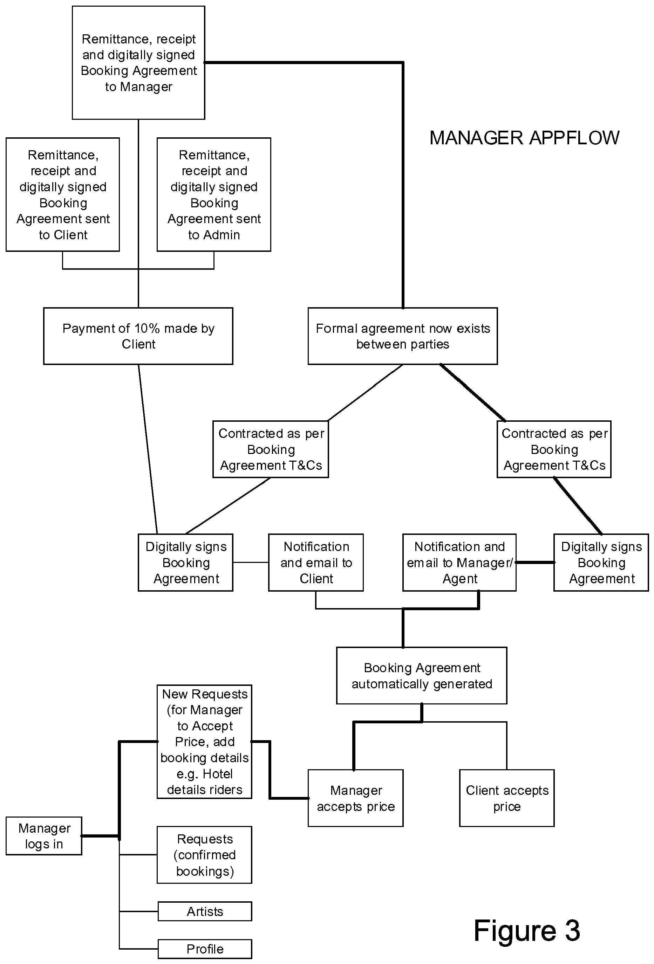

Referring to Figure 3, to log in, each manager/agent is required to enter the following fields :
- Registered Email ID
- Password

A manager/agent has privileges whereas additional actions can be completed, including editing an artist profile and update availability calendar in real time.

Furthermore, managers/agents will get a response request in the form of an enquiry from users for their artist. When any user enquires about booking their artist, this enquiry is sent to the manager/agent and the administrative users.

Administrative users can accept/reject the enquiry as an additional filtering process. If the administrative users do reject an enquiry, then a notification message would be sent to the user.

Each manager/agent may have a list of artists who they would manage. The manager/agent can remove any of the artists from their list, for example, if they are no longer representing that artist. But only administrative users are able to add the artists to a manager's list, as this requires the consent of the artist.

The manager/agent and administrative users are able to add the schedule of an artist for their events. Schedule details are included in a predefined template and will include the following
- Event/function Name
- Event/function Date
- Event/function Time
- Venue (Place)
- Type of Event (Public/Commercial)
- Purpose of Event
- Description of Event
- Contact Information
- Flight check-in Time and date
- Departure Date and Time
- Airport Pickup details (Pickup person, car number, contact number)
- Hotel Details (check-in /out date and time with hotel name, room number)
- Transfer Details
- On-site Contact's Details

It is noted that the above details of Event/function Name, Event/function Date, Event/function Time, Venue, Type of Event, Purpose of Event, Description of Event, and Contact Information are defined by the user (client).

These details are completed by the manager/agent and administrative users through application after confirming the event booking. A notification will be sent to the artist directly as well.

For artists directly, they can log in using unique credentials. Administrative users provide credentials to each and every artist. Administrative users have to fill the following fields for an artist log in:
- Registered Email ID
- Password

The main 'home screen' after an artist has logged in includes their calendar where dates that are filled can be selected to reveal event details. The artist can view the detailed schedule of any upcoming date by selecting that date. There is also a save functionality in case details are added which the artist wishes to save. The artist will be notified for every new event of which the booking process is complete.

Administrative users are able to view a completely transparent version of user interface 104. They are able to manage all users and managers which includes:
- Block/unblock any user.
- View the details of every user.
- Search and browse detail of any user.
- View the list of all managers/agents.
- View list of credentials of every manager/agent.
- Create credentials for managers/agents.
- Add managers/agents.
- Block/unblock any manager/agent.
- View the details of every manager/agent.
- Remove any managers/agents.
- View list of artists.
- Edit/remove or add any artist from a manager/agent list.
- Search and browse detail of any manager/agent.
- Search and browse details of all artists.
- View the details of all artists.
- Accept/reject booking requests.
- Block any of artists, which results in that artist no being displayed to users.

Referring to Figures 2 and 3, when new booking is added, emails/notification is sent to the user, manager and ACTA administrative user. As noted above, at this point, the date on the calendar of the desired artist is Orange to indicate "under enquiry".

The user is then sent an email to confirm the booking is received and under review, confirming the enquiry details (including Event Type: **Public/Corporate/Private**, Client Name, Client Email, Client Phone Number, Company Name, Date, Time of Day, Performance Type, Venue, PAX, Event Description, and Special Enquiry) and providing an option to view the full enquiry in the application or website.

In an alternate embodiment, the manager/agent is then sent an email to confirm a new booking enquiry for one of their artists has been received, confirming the enquiry details (including Event Type: **Public/Corporate/Private**, Client Name, Client Email, Client Phone Number, Company Name, Date, Time of Day, Performance Type, Venue, PAX, Event Description, and Special Enquiry) and providing an option to view the full enquiry in the application or website.

The administrative user is then sent an email to confirm a new booking enquiry for the artist has been entered, confirming the enquiry details (including Event Type: **Public/Corporate/Private**, Client Name, Client Email, Client Phone Number, Company Name, Date, Time of Day, Performance Type, Venue, PAX, Event Description, and Special Enquiry) and providing an option to view the full enquiry in the application or website.

The administrative user then liaises with manager to price the enquiry. When enquiry is priced, email/notification of the event booking agreement is sent to the manager/agent first requesting the price and terms and conditions to be accepted.

Once the manager/agent accepts the price and terms and conditions, email/notification is sent to the user requesting the price and terms and conditions to be accepted. If the price and terms and conditions are accepted, the user will then be directed to a payment section of the application or website, where they pay a percentage of the entire amount owing via the usual means (including PayPal/credit card)

Once terms and conditions have been accepted and payment is processed, the user, manager/agent and administrative users are sent emails/notifications that the booking is confirmed, with invoice, remittance and digitally signed booking agreement attached. Once the deposit is made and booking is confirmed, email/notification is sent to the artist confirming the booking, including performance details (such as User company name, Date, Time, Performance Type, Venue, PAX, Event Description, and Special Enquiry). At this point the calendar date and time will now be in red to indicate unavailable.

The application version will also provide notifications on the device.

### CONCLUSIONS

It will be appreciated that the disclosure above provides various significant systems and methods for real-time updating of viewable schedules. The advantages include:
- The real-time artist availability will eliminate 90% of enquiries across multiple booking sources per artist booking.
- The complete transparency of the calendar will eliminate of all current causes that result in lost bookings.
- Digital acceptance of enquiry/pricing/booking with all parties accepting booking parameters at the same time.
- Notifications when a booking is edited, that provides real time notice to all parties on booking edits regarding event appearance including travel, accommodation, sound-check and performance briefs.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The term memory unit as used herein, if clear from the context and unless explicitly stated otherwise, also encompasses a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one of more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code.

Furthermore, a computer-readable carrier medium may form, or be included in a computer program product.

In alternative embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

Note that while some diagrams only show a single processor and a single memory that carries the computer-readable code, those in the art will understand that many of the components described above are included, but not explicitly shown or described in order not to obscure the inventive aspect. For example, while only a single machine is illustrated, the term "machine" shall also be taken to include any collection of machines that individually or jointly execute a set (or multiple sets) of instructions to perform any one or more of the methodologies discussed herein.

Thus, one embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

The software may further be transmitted or received over a network via a network interface device. While the carrier medium is shown in an exemplary embodiment to be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to included, but not be limited to, solid-state memories, a computer product embodied in optical and magnetic media; a medium bearing a propagated signal detectable by at least one processor of one or more processors and representing a set of instructions that, when executed, implement a method; a carrier wave bearing a propagated signal detectable by at least one processor of the one or more processors and representing the set of instructions a propagated signal and representing the set of instructions; and a transmission medium in a network bearing a propagated signal detectable by at least one processor of the one or more processors and representing the set of instructions.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the above description of exemplary embodiments of the invention, various features of the invention are sometimes grouped together in a single embodiment, FIG., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A system for real-time updating of at least one centrally viewable schedule including:
a central server having a secure database that includes a plurality of centrally viewable schedules each associated with a unique registered contributing user and a communication module; and
at least one user interface in communication with the communication module for viewing a schedule associated with the one or more unique registered contributing users, wherein the central server is responsive to a secure request in relation to the one or more unique registered contributing users from the at least one user interface to, within a predefined time period:
check the schedule associated with the one or more unique registered contributing users; and
based on the check, substantially simultaneously provide: to the at least one user interface through the communication module a request response; and to the one or more unique registered contributing users through the communication module a notification response, and selectively update in real-time the schedule associated with the one or more unique registered contributing users.

2. A system according to claim 1 wherein each unique registered contributing user is either an artist user or a venue user, and wherein artist user may include an artist agent user.

3. A system according to claim 1 or 2, wherein the schedule associated with the one or more unique registered contributing users includes free and/or occupied blocks and is viewable on the at least one user interface, and wherein the secure request may include a desired enquiry date and a desired enquiry time, wherein the desired enquiry date and time can only be chosen from the free blocks.

4. A system according to any of claims 1 to 3, wherein the central server includes a document generation module for generating one or more of the group including: a user booking agreement form; a contributor booking agreement form; and an expense form.

5. A system according to claim 4 wherein the request response includes the booking agreement form and/or wherein the notification response includes the contributor booking agreement form.

6. A system according to claim 4 or claim 5 wherein the request response includes the expense form.

7. A method for real-time updating of at least one centrally viewable schedule including:
providing a central server having a secure database that includes a plurality of centrally viewable schedules each associated with a unique registered contributing user and a communication module;
providing at least one user interface in communication with the communication module for viewing a schedule associated with the one or more unique registered contributing users; and
by the central server, in response to a secure request in relation to one or more unique registered contributing users from the at least one user interface, within a predefined time period:
checking the schedule associated with the one or more unique registered contributing users; and
based on the check, substantially simultaneously providing: to the at least one user interface through the at least one communication module a request response; and to the one or more unique registered contributing users through the at least one communication module a notification response, and selectively updating in real-time the schedule associated with the one or more unique registered contributing users.

8. A method according to claim 7 wherein each unique registered contributing user is either an artist user or a venue user, and wherein artist user may include an artist agent user.

9. A method according to claim 7 or 8, wherein the schedule associated with the one or more unique registered contributing users includes free and/or occupied blocks and is viewable on the at least one user interface, and wherein the secure request may include a desired enquiry date and a desired enquiry time, wherein the desired enquiry date and time can only be chosen from the free blocks.

10. A method according to any of claims 7 to 9, wherein the central server includes a document generation module, and the method includes the additional step of generating one or more of the group including: a user booking agreement form; a contributor booking agreement form; and an expense form.

11. A system according to claim 10 wherein the request response includes the booking agreement form and/or wherein the notification response includes the contributor booking agreement form.

12. A system according to claim 10 or claim 11 wherein the request response includes the expense form.

13. A computer system including a processor configured to perform a method according to any one of the preceding claims 7 to 12.

14. A computer program product configured to perform a method according to any one of the preceding claims 7 to 12.

15. A computer readable medium carrying a set of instructions that when executed by one or more processors cause the one or more processors to perform a method according to any one of the preceding claims 7 to 12.
